# EUROPÄISCHE PATENTSCHRIFT

(11) **EP 2 418 465 B1**
(45) Veröffentlichungstag und Bekanntmachung des Hinweises auf die Patenterteilung: **22.02.2017**
(21) Anmeldenummer: 10170031.8
(22) Anmeldetag: 19.07.2010
(51) Int. Cl.: G01F 25/00, G01S 7/285, G01S 7/35, G01F 23/284, G01S 13/08, G01F 23/296, G01S 13/88

(54) **Amplitudenprofilierung in Füllstandmessgeräten**
Amplitude profiling in fill level measuring devices
Profilage d'amplitude dans des appareils de mesure du niveau de remplissage

(43) Veröffentlichungstag der Anmeldung: 15.02.2012
(73) Patentinhaber: VEGA Grieshaber KG, 77709 Wolfach (DE)
(72) Erfinder: Welle, Roland, 77709 Oberwolfach (DE); Griessbaum, Karl, 77796 Mühlenbach (DE); Motzer, Jürgen, 77723 Gengenbach (DE); Hoferer, Christian, 77654 Offenburg (DE); Kaufmann, Manuel, 77723 Gengenbach (DE); Gaiser, Martin, 72275 Alpirsbach (DE); Benz, Joachim, 77756 Hausach (DE)
(74) Vertreter: Maiwald Patentanwalts GmbH

(56) Entgegenhaltungen:
- EP-A2- 0 573 034
- WO-A2-2009/037000
- DE-A1- 4 332 071
- DE-A1- 10 260 962
- DE-A1-102004 055 551
- DE-A1-102007 042 042

## Beschreibung

### Gebiet der Erfindung

Die vorliegende Erfindung bezieht sich auf ein Verfahren zur Messung von Füllständen aller Art, wie zum Beispiel Verfahren auf Basis von Ultraschallsignalen, Radarsignalen, Mikrowellensignalen oder Vibrationen. Insbesondere betrifft die Erfindung eine Elektronikeinheit für ein Füllstandmessgerät, ein Füllstandmessgerät mit einer Elektronikeinheit, eine Verwendung eines Füllstandmessgerätes, sowie ein Verfahren zur Füllstandmessung.

### Technischer Hintergrund der Erfindung

Peter Devine: "Füllstandmessung mit Radar - Leitfaden für die Prozessindustrie" beschreibt den grundsätzlichen Aufbau kommerzieller Radarfüllstandmessgeräte.

DE 10 2005 003 152 A1 beschreibt ein Verfahren, bei dem die ordnungsgemäße Funktion eines Füllstandmessgeräts überprüft wird.

US 7,098,843 B3 beschreibt ein Verfahren, bei dem die Verstärkung eines

Empfangsverstärkers in Abhängigkeit von der Distanz zur Quelle des Signals verändert wird.

WO 2009/037000 A1 beschreibt Verfahren zur Extraktion von Echos und zum Tracking.

Meinke/Gundlach: "Taschenbuch der Hochfrequenztechnik" beschreibt die Vorgehensweise zur Voraussage der erwarteten Echoamplitude mit Hilfe der Radargleichung.

DE 102 60 962 A1 beschreibt ein Verfahren zur Speicherung von Echofunktionen.

Die bekannten Verfahren sind oft aufwändig und teilweise ungenau.

EP 0 573 034 A2 beschreibt ein Verfahren und eine Anordnung zur Abstandsmessung nach dem Impulslaufzeitprinzip, bei der nach jeder Aussendung eines Impulses das erhaltene Empfangssignal als Echoprofil gespeichert und das Nutzecho aus dem gespeicherten Echoprofil ermittelt wird.

DE 10 2004 055 551 A1 beschreibt ein Verfahren zur Auswertung und Korrektur von Gesamtmesssignalen eines Messgeräts, wobei Messsignale in Richtung des Mediums ausgesendet werden und an einer Oberfläche des Mediums als Nutz-Echosignale oder an einer Oberfläche eines Störelements als Stör-Echosignale reflektiert und empfangen werden.

DE 10 2007 042 042 A1 beschreibt ein Verfahren zur Ermittlung und Überwachung des Füllstands eines Mediums in einem Behälter nach einem Laufzeitmessverfahren. Störechosignale werden in einer Ausblendkurve mittels Stützpunkten erfasst, wobei die Stützpunkte über Verbindungsfunktionen miteinander verbunden werden.

DE 43 32 071 A1 beschreibt ein Verfahren zur Füllstandsmessung nach dem Radarprinzip. Um Ansatzbildungen des Füllguts an der Antenne sowie weitere Störungen zu erkennen, wird vor Durchführung der Messungen eine einer ungestörten Messung entsprechende ungestörte Echofunktion aufgenommen und gespeichert.

WO 2009/037000 A2 beschreibt ein Kompressionsverfahren zur Kompression einer Echofunktion.

### Zusammenfassung der Erfindung

Es ist daher eine Aufgabe der vorliegenden Erfindung, ein Verfahren und eine zugehörige Vorrichtung anzugeben, welche es gestattet, den Füllstand mit hoher Genauigkeit zu bestimmen.

Die Aufgabe wird durch die Merkmale der unabhängigen Patentansprüche gelöst. Weiterbildungen der Erfindung ergeben sich aus den Unteransprüchen.

Gemäß einem ersten Aspekt der Erfindung ist eine Elektronikeinheit für ein Füllstandmessgerät zur Bestimmung eines Füllstandes gemäß dem Gegenstand des Patentanspruchs 1 angegeben.

Die Elektronikeinheit weist eine Recheneinheit auf, die zur Ermittlung eines funktionalen Zusammenhangs zwischen der Entfernung einer Füllgutoberfläche zu dem Füllstandmessgerät und einer Amplitude eines von der Füllgutoberfläche reflektierten und von dem Füllstandmessgerät empfangenen Signalanteils ausgeführt ist.

Durch die Bestimmung des funktionalen Zusammenhangs zwischen dem Füllstand (der sich aus der Entfernung zwischen der Füllgutoberfläche und dem Füllstandmessgerät bestimmen lässt) und der Amplitude des empfangenen Signalanteils kann die Elektronikeinheit eine Wertung der (beispielsweise später) empfangenen Echos vornehmen. Insbesondere kann bestimmt werden, ob es sich bei einem bestimmten Echo um ein den Füllstand repräsentierendes Echo oder um ein Artefakt, also um ein "falsches" Echo handelt, welches beispielsweise auf eine Mehrfachreflexion im Behälter oder auf einen Behältereinbau zurückzuführen ist.

Durch die Auswertung der Amplitude entsprechender empfangener Signalanteile der Echokurve kann somit die Wahrscheinlichkeit erhöht werden, dass das Füllstandecho korrekt identifiziert wird. Auch ist es möglich, einen Überfüllungszustand zu detektieren.

Gemäß einem Ausführungsbeispiel der Erfindung weist die Elektronikeinheit weiterhin einen Speicher auf, wobei der funktionale Zusammenhang zwischen dem Füllstand und der Amplitude des empfangenen Signalanteils in Form von Stützstellen im Speicher abgelegt wird.

Auf Basis dieser Stützstellen kann eine Extrapolation erfolgen, um somit zu erwartende Amplituden (die Amplitude kann sich mit dem Füllstand ändern) vorauszusagen.

Gemäß einem weiteren Ausführungsbeispiel der Erfindung wird der funktionale Zusammenhang durch Anpassung der Koeffizienten in einer mathematischen Gleichung hergestellt.

Auf diese Weise ist eine genaue Vorhersage zukünftig zu erwartender Amplitudenwerte möglich.

Gemäß einem weiteren Ausführungsbeispiel der Erfindung wird der funktionale Zusammenhang zur Bewertung der Echos einer Echoliste verwendet.

Auch können zur Bewertung der Echos der Echoliste noch weitere Kriterien angelegt werden, beispielsweise Trendberechnungen, Erwartungsfenster, innerhalb denen der Füllstand mit hoher Wahrscheinlichkeit liegen sollte, oder andere Plausibilitätsüberlegungen.

Gemäß einem weiteren Ausführungsbeispiel der Erfindung wird die Ermittlung des funktionalen Zusammenhangs nur dann durchgeführt, wenn das Füllstandmessgerät den Füllstand mit hoher Zuverlässigkeit identifiziert hat.

Somit kann vermieden werden, dass ein falscher Wert hinsichtlich des funktionalen Zusammenhangs zwischen dem Amplitudenwert und dem Füllstand für spätere Berechnungen verwendet wird.

Gemäß einem weiteren Ausführungsbeispiel der Erfindung wird die Ermittlung des funktionalen Zusammenhangs nur dann durchgeführt, wenn sich das Echo der Füllgutoberfläche über mehrere Messzyklen hinweg in Bezug auf seine Position verändert.

Auf diese Weise kann unnötige Rechenarbeit vermieden werden.

Gemäß einem weiteren Ausführungsbeispiel der Erfindung wird bei der Ermittlung des funktionalen Zusammenhangs zumindest ein statistischer Kennwert für die Füllstandamplitude ermittelt.

Gemäß einem weiteren Ausführungsbeispiel der Erfindung wird der zumindest eine statistische Kennwert für die Füllstandamplitude zur Bewertung der Echos einer Echoliste verwendet.

Auf diese Weise kann die Wahrscheinlichkeit, dass ein falsches Echo irrtümlich als Füllstandecho klassifiziert wird, reduziert werden.

Gemäß einem weiteren Ausführungsbeispiel der Erfindung wird der funktionale Zusammenhang dazu verwendet, das Eintreten einer Überfüllsituation zu detektieren.

Das Füllstandmessgerät kann somit automatisiert auf eine Überfüllung des Behälters schließen.

Gemäß einem weiteren Ausführungsbeispiel der Erfindung wird das Eintreten der Überfüllsituation dem Benutzer und/oder einer übergeordneten Steuerung signalisiert.

Gemäß einem weiteren Ausführungsbeispiel der Erfindung weist der Speicher einen nicht flüchtigen Speicherbereich auf. Das Eintreten einer Überfüllsituation, der funktionale Zusammenhang und/oder der zumindest eine statistische Kennwert für die Füllstandamplitude wird hierbei in dem nicht flüchtigen Speicherbereich abgelegt, nachdem der entsprechende Wert gewonnen wurde.

Gemäß einem weiteren Ausführungsbeispiel der Erfindung wird innerhalb des Tracking insbesondere der Verlauf des Ortes eines Echos über mehrere Einzelmessungen hinweg verfolgt, und diese gesammelte Information wird in Form eines Tracks im nichtflüchtigen Speicherbereich abgelegt.

Gemäß einem weiteren Ausführungsbeispiel der Erfindung werden die in dem nicht flüchtigen Speicherbereich abgelegten Informationen bei der Wiederinbetriebnahme des Messgeräts gelesen und zur Bewertung von Echos verwendet.

Somit kann auch bei einem Neustart des Messgeräts sichergestellt werden, dass die Echos einer Echokurve korrekt klassifiziert werden bzw. dass der Füllstand korrekt berechnet wird.

Gemäß einem zweiten Aspekt der Erfindung ist ein Füllstandmessgerät mit einer oben und im Folgenden beschriebenen Elektronikeinheit angegeben.

Gemäß einem weiteren Aspekt der Erfindung ist die Verwendung eines Füllstandmessgeräts mit einer oben und im Folgenden beschriebenen Elektronikeinheit in einer Anwendung, in welcher eine Überfüllung eintreten kann, angegeben.

Gemäß einem weiteren Aspekt der Erfindung ist ein Verfahren zur Bestimmung eines Füllstandes mit einem Füllstandmessgerät gemäß dem Gegenstand des Patentanspruchs 6 angegeben.

Bei dem Verfahren erfolgt ein Aussenden eines Sendesignals zu einer Füllgutoberfläche. Daraufhin wird ein mit dem Sendesignal korrespondierendes Empfangssignal von einer entsprechenden Empfangseinrichtung des Füllstandmessgeräts detektiert. Daraufhin erfolgt eine Ermittlung des funktionalen Zusammenhangs zwischen der Entfernung zwischen der Füllgutoberfläche und dem Füllstandmessgerät und einer Amplitude eines von der Füllgutoberfläche reflektierten und von dem Füllstandmessgerät empfangenen Signalanteils des Empfangssignals.

An dieser Stelle sei zu bemerken, dass die oben und im Folgenden beschriebenen Merkmale jeweils sowohl für die Elektronikeinheit, das Füllstandmessgerät, die Verwendung und für das Verfahren gelten können. In anderen Worten lassen sich beispielsweise diejenigen Merkmale, die oben und im Folgenden im Hinblick auf die Elektronikeinheit beschrieben werden, auch als Verfahrensschritte implementieren, und umgekehrt.

Im Folgenden werden mit Verweis auf die Figuren Ausführungsbeispiele der Erfindung beschrieben.

### Kurze Beschreibung der Figuren

Fig. 1 zeigt eine Vorrichtung zur Echosignalverarbeitung, beispielsweise eine Elektronikeinheit.
Fig. 2 zeigt ein Füllstandmessgerät zur Messung eines Füllstands in einem Behälter gemäß einem Ausführungsbeispiel der Erfindung, sowie eine entsprechende Echokurve.
Fig. 3 zeigt eine Echoliste eines Füllstandmessgeräts.
Fig. 4 zeigt ein Füllstandmessgerät in der Objektüberwachung sowie einen funktionalen Zusammenhang gemäß einem Ausführungsbeispiel der Erfindung.
Fig. 5 zeigt ein Füllstandmessgerät bei der Messung von Flüssigkeiten sowie einen entsprechenden funktionalen Zusammenhang gemäß einem Ausführungsbeispiel der Erfindung.
Fig. 6 zeigt ein Füllstandmessgerät bei der Messung von Schüttgütern, sowie einen entsprechenden funktionalen Zusammenhang gemäß einem weiteren Ausführungsbeispiel der Erfindung.
Fig. 7 zeigt eine Vorrichtung zur Echosignalverarbeitung, beispielsweise in Form einer Elektronikeinheit, gemäß einem Ausführungsbeispiel der Erfindung.
Fig. 8 zeigt ein Ablaufdiagramm zur Füllstandmessung.
Fig. 9 zeigt eine Amplitudenprofilierung bei ruhiger Füllgutoberfläche gemäß einem Ausführungsbeispiel der Erfindung.
Fig. 10 zeigt eine Füllstandecho-Struktur.
Fig. 11 zeigt Echosignale bei unruhiger Füllgutoberfläche.
Fig. 12 zeigt drei Amplitudenprofile gemäß einem weiteren Ausführungsbeispiel der Erfindung.
Fig. 13 zeigt Beispiele für die Füllstandmessung mit übervollem Behälter.
Fig. 14 zeigt eine Elektronikeinheit gemäß einem weiteren Ausführungsbeispiel der Erfindung.

### Detaillierte Beschreibung von Ausführungsbeispielen

Die Darstellungen in den Figuren sind schematisch und nicht maßstäblich.

In der folgenden Figurenbeschreibung werden für die gleichen oder ähnlichen Elemente die gleichen Bezugsziffern verwendet.

Bei den nach dem FMCW oder Impuls - Laufzeitverfahren arbeitenden Füllstandsensoren werden elektromagnetische oder akustische Wellen in Richtung einer Füllgutoberfläche emittiert. Daran anschließend zeichnet der Sensor die vom Füllgut und den Behältereinbauten reflektierten Echosignale auf, und leitet daraus den jeweiligen Füllstand ab.

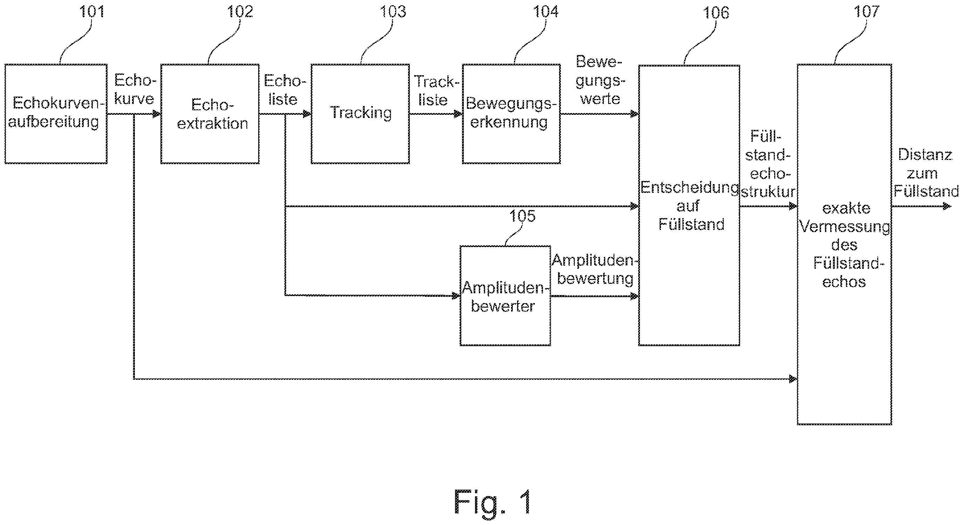

Fig. 1 zeigt den grundsätzlichen Aufbau der Echosignalverarbeitung innerhalb eines Füllstandmessgerätes.

Im Block "Echokurvenaufbereitung" 101 sind alle Hard- und Softwareeinheiten enthalten, die benötigt werden, um eine Echokurve als Abbild der aktuellen Reflexionsverhältnisse innerhalb eines Behälters bereitzustellen. Die Echokurve wird vorzugsweise in digitaler Form innerhalb eines Mikroprozessorsystems erfasst, und mit Hilfe bekannter Verfahren auf darin enthaltene Echos untersucht.

Die innerhalb des Blocks "Echoextraktion" 102 zu diesem Zweck angewendeten Verfahren umfassen insbesondere Verfahren aus dem Bereich der schwellwertbasierenden Echoextraktion oder auch Verfahren auf Basis einer skalenbasierenden Echoextraktion. Nach Abarbeitung des Echoextraktionsverfahrens wird eine digitale Echoliste bereitgestellt, die vorzugsweise Angaben zu Anfang, Ort, Ende und Amplitude eines oder mehrerer in der Echokurve enthaltenen Echos beinhaltet.

Um die Zuverlässigkeit der Echosignalverarbeitung eines Füllstandmessgerätes weiter zu erhöhen, werden die gefundenen Echos innerhalb des Blocks "Tracking" 103 in einen historischen Kontext gestellt. Innerhalb des Tracking wird insbesondere der Verlauf des Ortes eines Echos über mehrere Einzelmessungen hinweg verfolgt, und diese gesammelte Information in Form eines Tracks im flüchtigen Speicher abgelegt. Diese Daten (Track) können gemäß einem Ausführungsbeispiel der Erfindung auch in einem nichtflüchtigen Speicherbereich abgelegt werden. Die gesammelten Historieninformationen mehrerer Echos werden in Form einer Trackliste nach außen hin bereitgestellt.
Aufbauend auf der übergebenen Trackliste wird im Block "Bewegungserkennung" 104 eine Analyse der Trackliste auf kontinuierliche Veränderungen eines Echokennwertes, beispielsweise des Echoortes, durchgeführt. Die Ergebnisse dieser Analyse werden in Form von Bewegungswerten, welche mit den aktuellen Echos der Echoliste korrespondieren, nach außen hin bereitgestellt.

Die Echos der Echoliste, welche von der Echoextraktion 102 bereitgestellt wird, werden im Block "Amplitudenbewerter" 105 weiter untersucht. Der Amplitudenbewerter 105 ermittelt für jedes Echo der Echoliste den Echoort, und berechnet die am Ort des Echos theoretisch zu erwartende Echoamplitude. Entspricht die Amplitude des Echos exakt der erwarteten Echoamplitude, so wird dem Echo eine hohe Amplitudenbewertung zugewiesen. Weicht die real vorhandene Amplitude des Echos jedoch stark von der zuvor errechneten, erwarteten Idealamplitude ab, so wird dem Echo eine Amplitudenbewertung von null zugeordnet.

Im Block "Entscheidung auf Füllstand" 106 werden die Daten der aktuellen Echoliste, die dazu ermittelten Bewegungswerte der Echos und die Ergebnisse der Amplitudenbewertung miteinander abgeglichen. Im Idealfall zeichnet sich das von einer Füllgutoberfläche erzeugte Echo gerade dadurch aus, dass es unter der Vielzahl an Echos der Echoliste das Echo mit der größten Amplitudenbewertung ist.
Um die Genauigkeit der Füllstandmessung weiter zu verbessern, kann die Position des bestimmten Füllstandechos durch den optionalen Block "exakte Vermessung des Füllstandechos" 107 unter Anwendung rechenzeitintensiver Verfahren, beispielsweise Interpolationsverfahren, mit hoher Genauigkeit bestimmt werden. Die bestimmte Distanz zum Füllstand wird nach außen hin bereitgestellt. Die Bereitstellung kann in analoger Form (4..20 mA Schnittstelle) oder auch in digitaler Form (Feldbus) realisiert werden.

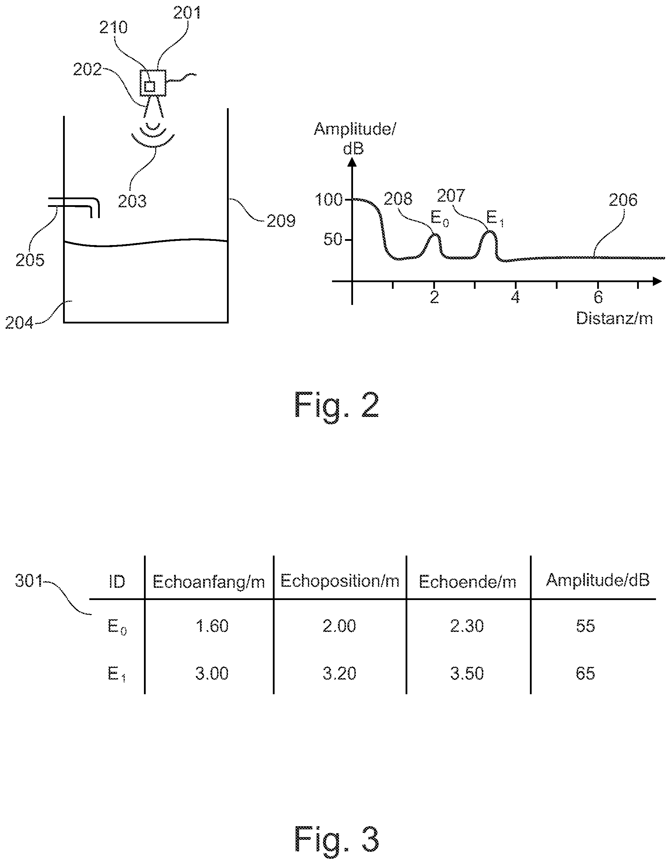

Die Vorteile der vorliegenden Erfindung ergeben sich aus den speziellen Randbedingungen, denen die Echosignalverarbeitung innerhalb eines Füllstandmessgerätes unterliegt. Fig. 2 zeigt eine typische Anwendung eines solchen Gerätes.

Es sei an dieser Stelle daraufhingewiesen, dass sämtliche Pegel im vorliegenden Text und in den zugehörigen Figuren als Relativpegel zu verstehen sind. Der Absolutpegel, welcher als Bezugsgröße für die Berechnung der Relativpegel verwendet wird, hat auf die Funktionsweise der vorliegenden Erfindung keinerlei Einfluss.

Das Füllstandmessgerät 201 strahlt über die Antenne 202 ein Signal 203 in Richtung des zu vermessenden Mediums 204 ab. Das Füllstandmessgerät selbst kann mit Hilfe von Ultraschall, Radar, Laser oder dem Prinzip der geführten Mikrowelle die Distanz zum Medium ermitteln. Als Signale kommen dementsprechend sowohl Ultraschallwellen als auch elektromagnetische Wellen in Betracht. Das Medium 204 reflektiert die auftreffende Welle zurück zum Messgerät, wo diese empfangen und verarbeitet wird. Gleichzeitig wird das abgestrahlte Signal auch von Behältereinbauten, beispielsweise einem eingebauten Rohr 205 reflektiert. Die im Füllstandmessgerät 201 empfangene Echokurve 206 kann somit neben dem vom Füllstand 204 hervorgerufenen Füllstandecho 207 auch Echos 208 von fest eingebauten Störstellen 205 enthalten, welche nachfolgend als Störechos bezeichnet werden. Der Füllgutbehälter 209 besitzt im vorliegenden Beispiel eine zylindrische Form.

Innerhalb der nun anlaufenden Signalverarbeitung wird die Echokurve 206 durch die Recheneinheit 210 gezielt auf Echos hin untersucht. Als Ergebnis der Echoextraktion 102 wird eine Echoliste 301 nach dem Schema der Fig. 3 erzeugt. Die Echoliste beinhaltet neben den charakteristischen Kennwerten des vom Rohr 205 erzeugten Störechos E0 bzw. 208 ein weiteres vom Medium 204 erzeugtes Echo E1 bzw. 207.

Selbstverständlich stellen die dargestellten Merkmale der Echoliste lediglich eine spezielle Implementierung einer Echoliste dar. In der Praxis sind auch Echolisten mit weiteren oder veränderten Merkmalen eines Echos gebräuchlich.

Aufbauend auf der erzeugten Echoliste 301 kommen im weiteren Verfahrensablauf spezialisierte Algorithmen zum Einsatz, welche die Möglichkeit eröffnen, den Verlauf des Ortes einzelner Echos über mehrere Messungen hinweg zu verfolgen. Die dazu verwendeten Verfahren können gemäß dem gegenwärtigen Stand der Technik erfolgen und sind in der einschlägigen Literatur unter dem Begriff "Tracking" ausführlich beschrieben.

Nach Abschluss des Tracking 103 werden die in Form einer Trackliste ermittelten örtlichen Verläufe der einzelnen Echos der Echoliste im Block "Bewegungserkennung" 104 weiter verarbeitet. Ziel dieses Verarbeitungsschrittes ist, eine Aussage darüber zu treffen, welche Echos sich über mehrere Messungen hinweg bezogen auf ihren Echoort bewegen, und welche sich in Bezug auf den ermittelten Echoort stationär verhalten. Die an dieser Stelle verwendeten Verfahren können ebenfalls gemäß dem aktuellen Stand der Technik erfolgen und sind beispielweise in EP 10 156 793.1 ausführlich beschrieben.

Mit Hilfe der ermittelten Bewegungswerte fällt es nun leicht, das vom Füllgut 204 erzeugte Echo der Echoliste 301 zu identifizieren, zeigt dieses doch nach erfolgter Befüllung oder Entleerung einen ausgeprägten Bewegungswert, wohingegen die Werte der ermittelten Orte der Echos der Störstelle 205 eine ausgeprägte Stationarität besitzen.

Probleme kann dieses Verfahren jedoch im Einschaltmoment und in der Zeitspanne bis zur ersten Befüllung oder Entleerung des Behälters bereiten. Da ohne merkliche Änderung der Füllhöhe im Behälter keines der vorhandenen Echos eine ausgeprägte Bewegung zeigt, werden von der Bewegungserkennung alle Echos der Echoliste als stationär eingestuft. Eine Entscheidung, welches der identifizierten Echos das vom Füllgut 204 verursachte Echo ist, ist ohne weitere Informationen nicht möglich.

In solchen Fällen übernimmt der Amplitudenbewerter 105 eine zentrale Rolle innerhalb der Signalverarbeitungskette des Füllstandmessgerätes. Es sei an dieser Stelle darauf hingewiesen, dass die logische Aufteilung der durchzuführenden algorithmischen Schritte gemäß Fig. 1 lediglich eine mögliche Variante darstellt. Vielfach werden die gleichen Verfahrensschritte in verschiedenartig definierte Blöcke aufgeteilt. So kann beispielsweise die Funktionalität des "Amplitudenbewerters" 105 auch innerhalb der "Entscheidung auf Füllstand" 106 implementiert werden.

Dem Amplitudenbewerter 105 obliegt die Aufgabe, die Echos der aktuell vorliegenden Echoliste 301 im Hinblick auf ihre aktuelle Amplitude zu bewerten. Die diesem Verfahrensschritt zu Grunde liegende Idee wird für den Fall eines Radarfüllstandmessgerätes aus der allgemeinen Radargleichung abgeleitet, welche beispielsweise in "Meinke/Gundlach: Taschenbuch der Hochfrequenztechnik" ausführlich beschrieben wird. Für den Fall einer Füllstandmessung mit Ultraschall oder Laser können entsprechende physikalische Gesetzmäßigkeiten aus der einschlägigen Literatur entnommen werden.

So ist es beispielsweise mit Hilfe der Radargleichung möglich, den Empfangspegel des Echos eines Objektes in einer vorab bekannten Entfernung bei bekanntem Sendepegel im Voraus zu berechnen. Der Amplitudenbewerter ermittelt für die verschiedenen Echos der Echoliste unter Verwendung mathematischer Gleichungen die theoretisch zu erwartende Echoamplitude, und vergleicht diese mit der tatsächlich empfangenen Amplitude des jeweils betrachteten Echos. Entspricht die tatsächlich empfangene Echoamplitude der theoretisch zu erwartenden Amplitude einer Füllgutreflexion an der entsprechenden Stelle, so wird dieser Zusammenhang in Form einer hohen Amplitudenbewertung des entsprechenden Echos an die Entscheidung auf Füllstand 106 übermittelt. Weicht die empfangene Amplitude stark von der von einer Füllgutreflexion zu erwartenden Echoamplitude ab, so führt dies zu einer niedrigen Amplitudenbewertung.

Innerhalb der Entscheidung auf Füllstand 106 kann nun auch im Moment des Einschaltens des Füllstandmessgerätes oder bei fehlender Bewegung eine sichere Identifikation des Füllstandechos realisiert werden, indem beispielsweise genau dasjenige Echo der Echoliste 301 als Füllstandecho identifiziert wird, dessen Amplitudenbewertung am höchsten ist.

Das zuvor beschriebene Verfahren der Amplitudenbewertung führt in der praktischen Anwendung immer wieder zu Problemen.

Grundsätzlich kann die Gültigkeit der Radargleichung auf Reflektoren beschränkt sein, welche sich im Fernfeld einer Sendeantenne befinden. Diese Bedingung ist genau dann hinreichend erfüllt, wenn die Entfernung zwischen Objekt und Sender deutlich größer als die Wellenlänge des Radarsignals ist. Im vorliegenden Fall eines Füllstandradargerätes mit einer Wellenlänge von typischerweise 5 cm ist diese Bedingung hinreichend erfüllt. Zudem wird als weitere Voraussetzung verlangt, dass der zu messende Reflektor von der Sendekeule der verwendeten Radarantenne großflächig überstrahlt wird.

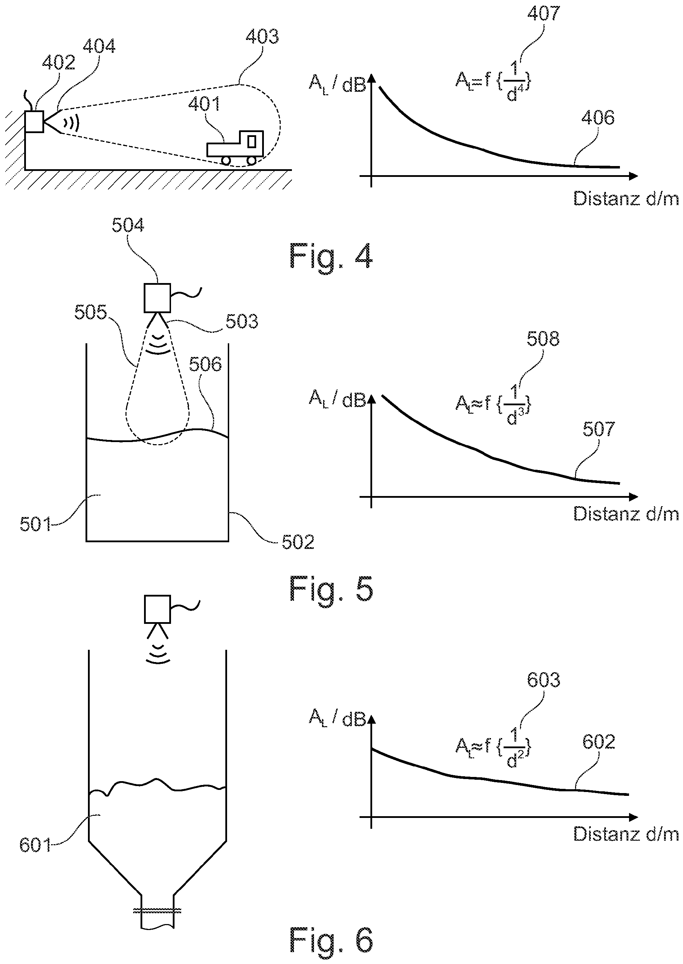

Fig. 4 zeigt einen zwar untypischen, aber grundsätzlich möglichen Anwendungsfall eines Füllstandmessgerätes im Rahmen einer Objektüberwachung. Das zu überwachende Objekt 401 befindet sich in ausreichend großer Entfernung vom Messgerät 402, und wird von der Sendekeule 403 der Radarantenne 404 großflächig überstrahlt. Die Sendekeule der Radarantenne hängt direkt vom Aufbau der Antenne ab, und kann mit gängigen Simulationsprogrammen für den jeweils verwendeten Antennentyp mit hinreichender Genauigkeit im Voraus bestimmt werden. Die Randbedingungen für die Anwendung der Radargleichung zur Bestimmung des theoretisch zu erwartenden Empfangspegels sind für den Anwendungsfall der Fig. 4 hinreichend erfüllt, die sich ergebende Funktion der erwarteten Empfangsamplitude A_{L} 406 des Echos des Objektes 401 ist eine Funktion der inversen Entfernung d zum Objekt potenziert mit dem Exponenten vier 407 (A_{L} = f(d⁻⁴)).

In Fig. 5 wird eine weitere Anordnung zur Messung der Füllhöhe eines Mediums 501 innerhalb eines Behälters 502 dargestellt. Der Darstellung ist direkt zu entnehmen, dass die zur Antenne 503 des Füllstandmessgerätes 504 gehörende Antennenkeule 505 aufgrund der geringen Distanz zum Füllgut nicht in der Lage ist, die komplette Oberfläche 506 des reflektierenden Mediums 501 zu überstrahlen. Zudem kann insbesondere bei kleinen Behältern aufgrund der sich ergebenden kurzen Entfernungen zum Füllgut ein Übergang in den Nahbereich der Antenne eintreten. Beide Effekte führen dazu, dass die vom Füllgut reflektierte Amplitude nicht mehr hinreichend genau mit der Radargleichung prognostiziert werden kann. Auf Basis empirischer Erfahrungswerte lässt sich die zu erwartende Amplitude A_{L} gemäß einer Funktion 507, welche von der inversen Entfernung d zum Objekt, potenziert mit dem Exponenten drei 508 abhängt (A_{L} ≈ f(d⁻³)), näherungsweise im Voraus bestimmen. Grundsätzlich ergibt sich im Rahmen dieser Vorgehensweise jedoch zusätzlich das Problem, dass die Funktion zur Berechnung der erwarteten Empfangsamplitude in verschiedenerlei Hinsicht von der Geometrie des Behälters 502, der Dielektrizitätskonstante des Mediums 501 und auch der verwendeten Antenne 503 abhängt, was eine relativ umfangreiche Eingabe von Parametern notwendig macht.

Noch schwieriger können sich die Verhältnisse bei der Messung von Schüttgütern 601 gestalten. Fig. 6 zeigt eine entsprechende Anordnung. Empirische Beobachtungen legen einen Verlauf 602 der zu erwartenden Amplitudenwerte nahe, welcher eine Funktion 603 in Abhängigkeit von der inversen quadratischen Entfernung des Reflektors ist (A_{L} ≈ f(d⁻²)). Wie im Falle der Flüssigkeiten muss jedoch auch in diesem Fall eine Anpassung der Funktion an die physikalischen Gegebenheiten im Rahmen einer relativ umfangreichen Parametrierung erfolgen.

Alle zuvor beschriebene Verfahren zur Ermittlung der erwarteten Echoamplitude an einem vorgebbaren Ort können nur nach entsprechender Parametrierung des Gerätes angewendet werden, und führen selbst dann nur zu ungenauen Ergebnissen.
Die beispielhaft dargestellten Nachteile bei der Vorausberechnung der erwarteten Echoamplitude des Füllstandechos treten auch bei der Verwendung von anderen Messverfahren auf. So wird beispielsweise bei der Messung mit Ultraschall die real empfangene Echoamplitude des Füllstandechos durch Staubanteile in der Behälteratmosphäre stark gedämpft, und weicht damit stark von der erwarteten Idealamplitude des Füllstandechos ab.

Die vorliegende Erfindung schafft ein geeignetes Verfahren zur Bestimmung eines Erwartungswertes für die Amplitude des von der Füllgutoberfläche erzeugten Füllstandechos.

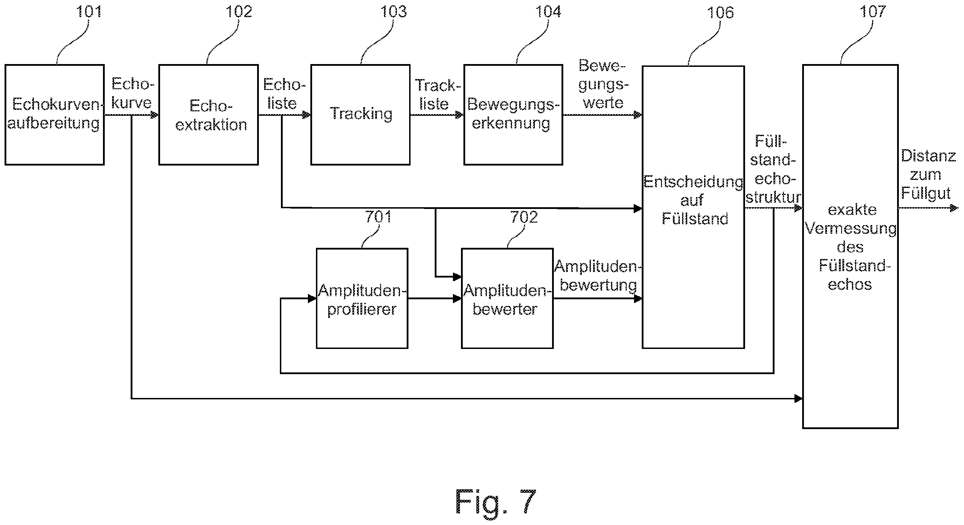

Der in Fig. 7 dargestellte Aufbau einer Signalverarbeitungseinheit entspricht weitestgehend dem Aufbau aus Fig. 1, unterscheidet sich jedoch durch die neu hinzukommende Verarbeitungseinheit "Amplitudenprofilierer" 701 und die modifizierte Verarbeitungseinheit "Amplitudenbewerter" 702.

Es ist eine zentrale Idee der vorliegenden Erfindung, die fehlerträchtige und aufwendige Bestimmung der erwarteten Amplitude des Füllstandechos an einer bestimmten Stelle nicht mit Hilfe mathematischer Gleichungen zu realisieren, sondern diese durch automatisch erworbenes Applikationswissen innerhalb des Füllstandmessgerätes zu ersetzen. Hierzu wird der Block "Amplitudenprofilierer" 701 vorteilhaft verwendet. Aufgabe dieser Einheit ist es, den vom Block "Entscheidung auf Füllstand" bestimmten Füllstand fortlaufend zu überwachen, um daraus ein Profil der bislang beobachteten Amplitudenwerte des Füllstandechos zu erstellen. Dieses Amplitudenprofil wird dem Amplitudenbewerter 702 zur Verfügung gestellt, was diesen wiederum in die Lage versetzt, anhand des übergebenen Amplitudenprofils die erwartete Amplitude des Füllstandechos an einem bestimmten Ort zu ermitteln.

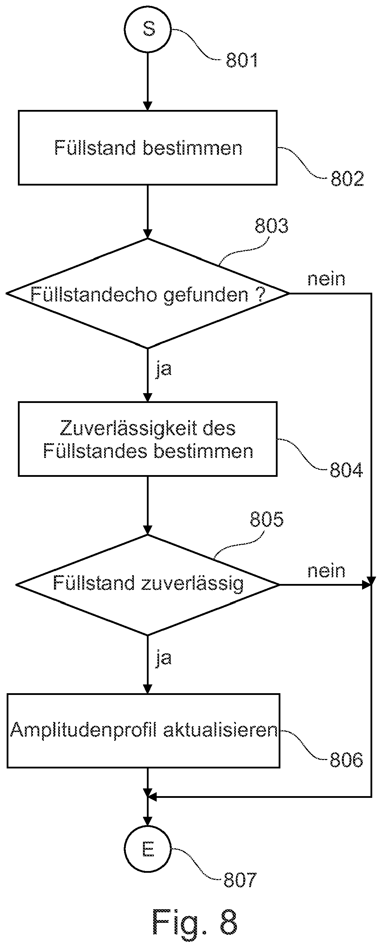

Fig. 8 zeigt ein Ablaufdiagramm zur Amplitudenprofilierung in Füllstandmessgeräten. Der dargestellte Ablauf wird in jedem Messzyklus des Füllstandmessgerätes durchlaufen. Das Verfahren beginnt im Startzustand 801.
Im Schritt 802 wird der aktuelle Füllstand bestimmt. In diesem Schritt sind nahezu alle Verfahrensschritte eines konventionellen Füllstandmessgerätes enthalten. Insbesondere wird in diesem Schritt eine Echokurve empfangen, und es werden Echos extrahiert. Die Echos werden anschließend auf Bewegung hin untersucht. Zudem werden die Amplituden der Echos im Amplitudenbewerter 702 nach bekannten Verfahren bewertet. Der Amplitudenprofilierer liefert zum Start des Systems eine Kurve mit erwarteten Amplitudenwerten, welche beispielsweise durch Vorgabe im Werk fest definiert werden kann. Zudem wird in diesem Verfahrensschritt eine Entscheidung auf das aktuelle Füllstandecho berechnet, und dieses Füllstandecho nach außen hin in strukturierter Form bereitgestellt.

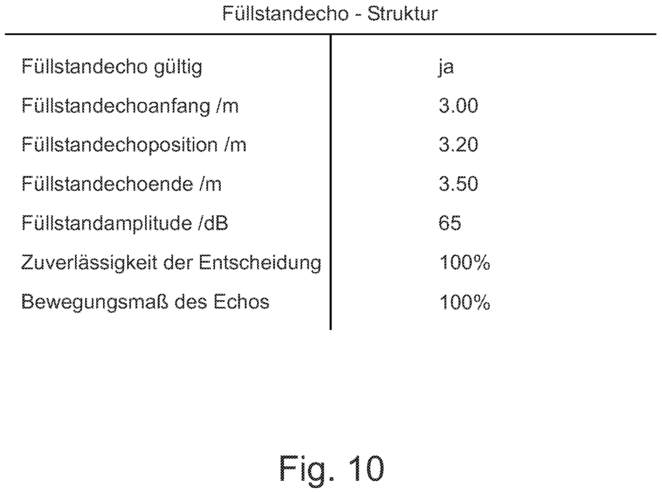

Fig. 10 zeigt beispielhaft eine solche Struktur, welche neben dem Ort des Füllstandechos auch dessen Amplitude und die Zuverlässigkeit der Entscheidung beinhaltet.

Im Schritt 803 wird die bereitgestellte Füllstandechoinformation vom Amplitudenprofilierer 701 untersucht. Wurde ein gültiges Füllstandecho gefunden, so wird in den Schritt 804 verzweigt. Ansonsten endet das Verfahren direkt im Endezustand 807.

Im Schritt 804 wird die Zuverlässigkeit der Füllstandechoinformation betrachtet. Mit anderen Worten wird an dieser Stelle untersucht, ob der Block "Entscheidung auf Füllstand" 106 seine Auswahl eines Echos als Füllstandecho mit hinreichend großer Sicherheit getroffen hat. Ein Maß für die Sicherheit der Entscheidung kann beispielsweise die in der Struktur in Fig. 10 enthaltene Zuverlässigkeit der Entscheidung sein, welche sich beispielsweise aus dem Signal-Rauschverhältnis des Füllstandechos ableiten lässt. Ein Maß für die Sicherheit der Entscheidung kann gemäß einer weiteren Ausführungsform auch das Bewegungsmaß des Füllstandechos sein.

Wurde das Füllstandecho zuverlässig identifiziert, so wird in den Verfahrensschritt 806 verzweigt. Ansonsten endet das Verfahren im Endezustand 807.

Im Schritt 806 wird nun das Amplitudenprofil innerhalb des Amplitudenprofilierers 701 aktualisiert. Die vorab im Arbeitsspeicher enthaltene Amplitude an der Stelle des aktuellen Füllstandechos wird innerhalb dieses Verfahrensschrittes durch die Amplitude des aktuellen Füllstandechos ersetzt. Zudem mag es möglich sein, den neu erfassten Amplitudenwert in einem nichtflüchtigen Speicher persistent abzulegen.

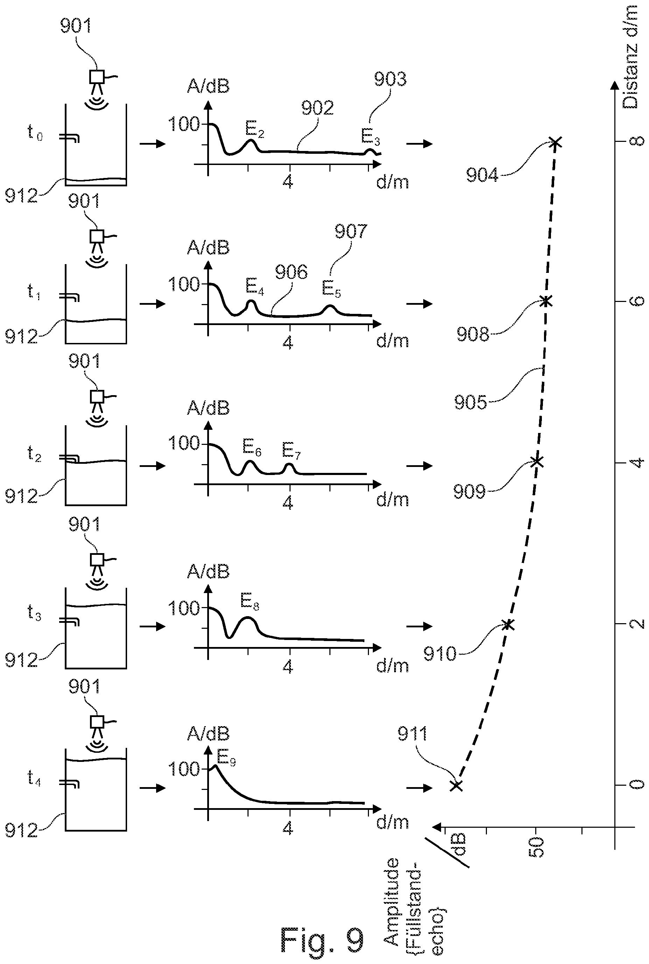

Fig. 9 zeigt beispielhaft die Ablaufschritte des Verfahrens anhand einer Befüllung eines Behälters. Das Gerät wird zum Zeitpunkt to in Betrieb genommen. Auf Basis der werksseitig vorgesehenen Bewertungskriterien mag sich das Füllstandmessgerät 901 anhand der aktuell vorliegenden Echokurve 902 für das Echo E3 bzw. 903 als aktuellen Füllstand entscheiden. Der Amplitudenprofilierer 701 übernimmt die Echoamplitude des Füllstandechos als neue Stützstelle 904 in das von ihm verwaltete Amplitudenprofil 905. Innerhalb des darauffolgenden Messzyklus zum Zeitpunkt t₁ wird anhand der Echokurve 906 das Echo E5 bzw. 907 als Füllstand identifiziert. Der Amplitudenprofilierer 701 aktualisiert auf Basis dieser Entscheidung sein Amplitudenprofil 905 um die Stützstelle 908. Im weiteren Betrieb des Füllstandmessgerätes wird das Amplitudenprofil 905 zu den Zeitpunkten t₂, t₃, t₄ durch Ergänzung um die Stützstellen 909, 910, 911 fortlaufend aktualisiert. Nachdem der Behälter 912 einmal komplett befüllt wurde, liegt im Amplitudenprofilierer ein komplett erlerntes Amplitudenprofil 905 der aktuellen Anwendung vor, das nachfolgend für die Bewertung von Echolisten verwendet werden kann.

Es sei an dieser Stelle daraufhingewiesen, dass gemäß einem weiteren Ausführungsbeispiel ggf. fehlende Bereiche des Amplitudenprofils durch werksseitig definierte Standardwerte ersetzt werden können. Somit ist es möglich, das Amplitudenprofil 905 zu jedem der Zeitpunkte to bis t₄ dem Amplitudenbewerter 702 zur Verfügung zu stellen.

Gemäß einem weiteren Ausführungsbeispiel ist es auch möglich, fehlende Amplitudenwerte bei Vorhandensein bereits erlernter Stützstellen zu interpolieren, oder durch Anpassung der Parameter vorab definierter mathematischer Gleichungen (beispielsweise der Radargleichung) zu berechnen.

Das erlernte Amplitudenprofil wird vorteilhafterweise in einen nichtflüchtigen Speicherbereich des Sensors kopiert, um nach einem Stromausfall bei der Wiederinbetriebnahme des Gerätes unmittelbar wieder zur Verfügung zu stehen. Die Speicherung im nichtflüchtigen Speicherbereich kann in jedem Messzyklus, oder aber auch in einem vorab definierten Zeitraster oder ereignisgesteuert, beispielsweise bei Veränderung der Füllhöhe, erfolgen.

Die vorgeschlagene Ausführungsform bietet gegenüber dem aktuellen Stand der Technik den Vorteil, ein exaktes, applikationsspezifisches Abbild der Amplitude des Füllstandechos zu erzeugen, ohne dass eine externe, benutzerinitiierte Aktion notwendig ist. Die einmal ermittelte Amplitude wird bei erneutem Erreichen einer bestimmten Füllhöhe des Mediums mit hoher Genauigkeit so wieder reproduziert, soweit es sich bei dem Medium im Behälter um ein Medium mit einer ruhigen Oberfläche handelt.

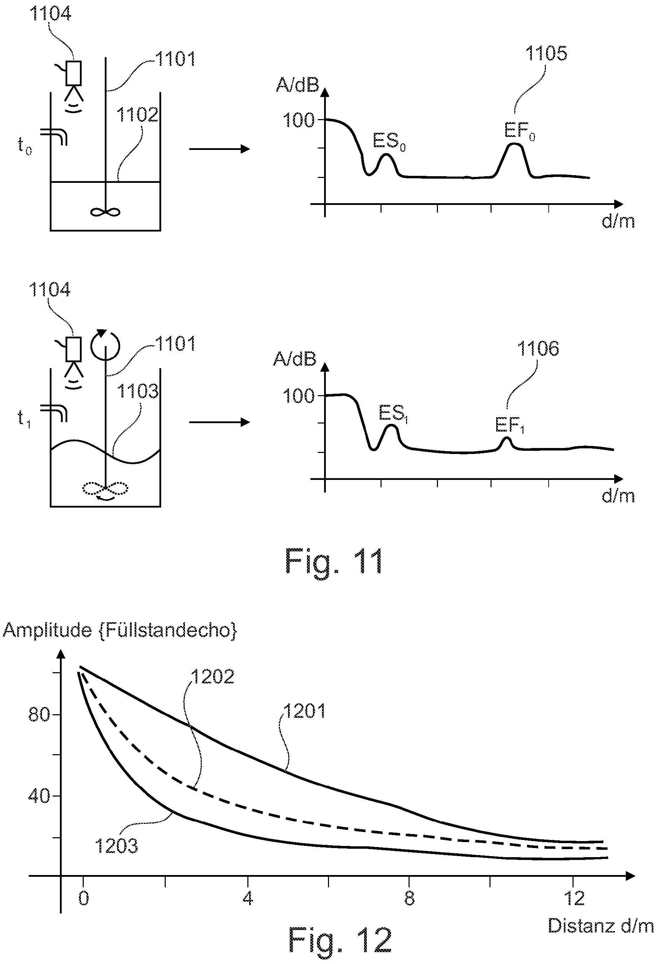

Andere Verhältnisse ergeben sich bei bewegten Oberflächen von Flüssigkeiten oder mit den unterschiedlich profilierten Oberflächen der Schüttlagen eines Schüttgutes. Fig. 11 verdeutlicht die Problematik anhand einer bewegten Oberfläche einer Flüssigkeit. Zum Zeitpunkt to wird für das Füllstandecho EF0 1105 eine Amplitude von beispielsweise 70 dB ermittelt, und durch den Amplitudenprofilierer 701 im Amplitudenprofil 905 als Stützstelle abgelegt. Wird nun das im Behälter befindliche Rührwerk 1101 zum Zeitpunkt t₁ in Betrieb genommen, so wird sich an Stelle der ebenen Flüssigkeitsoberfläche 1102 eine Trombe 1103 ausbilden, die sich zudem um das Rührwerk 1101 herum bewegt. Das Füllstandmessgerät 1104 wird nun an identischer Stelle ein Echo EF 1 1106 detektieren, welches aber aufgrund der unruhigen Reflexionsoberfläche 1103 nur noch eine verminderte Amplitude von beispielsweise 55 dB aufweist.

Gemäß einer weiteren Ausgestaltung des Verfahrens mag daher der Amplitudenprofilierer 701 nun derart modifiziert werden, dass er in die Lage versetzt wird, eine Statistik bezüglich der ihm übergebenen Amplitudenwerte des Füllstandechos zu berechnen.

Fig. 12 zeigt das Amplitudenprofil, wie es von einem um die Statistikberechnung erweiterten Amplitudenprofilierer erstellt werden kann. Das Amplitudenprofil besteht in vorliegendem Beispiel aus der Mittelwertkurve 1202, welche durch Bildung der Mittelwerte aller Füllstandamplituden an einer Position fortlaufend berechnet werden kann. Die Kurve 1201 beschreibt den maximal an einer Stelle erfassten Amplitudenwert eines Echos, die Kurve 1203 beschreibt den an einer Stelle minimal erfassten Füllstandamplitudenwert. Gemäß dieser weiteren Ausgestaltung des Verfahrens mögen dem Amplitudenbewerter 702 nun alle drei Statistikkurven 1201, 1202, 1203 übergeben werden. Ein Echo der Echoliste wird von dem Amplitudenbewerter 702 folglich genau dann eine hohe Amplitudenbewertung erhalten, wenn sich seine Amplitude im Bereich zwischen der Minimalkurve 1203 und der Maximalkurve 1201 befindet. Alternativ ist es auch möglich, den Abstand der real gemessenen Amplitude eines Echos von der Mittelwertkurve 1202 bei der Berechnung der Amplitudenbewertung zu verwenden.

Gemäß einer weiteren Ausgestaltung des Verfahrens mag es auch möglich sein, die obere Statistikkurve 1201 und die untere Statistikkurve 1202 aus anderen statistischen Zusammenhängen, beispielsweise der Varianz, abzuleiten. Selbstverständlich können die ermittelten Statistikwerte im flüchtigen und/oder nichtflüchtigen Speicherbereich eines Füllstandmessgerätes gespeichert werden. Die Speicherung kann in jedem Messzyklus, oder aber auch in einem vorab definierten Zeitraster oder ereignisgesteuert, beispielsweise bei Veränderung der Füllhöhe, erfolgen.

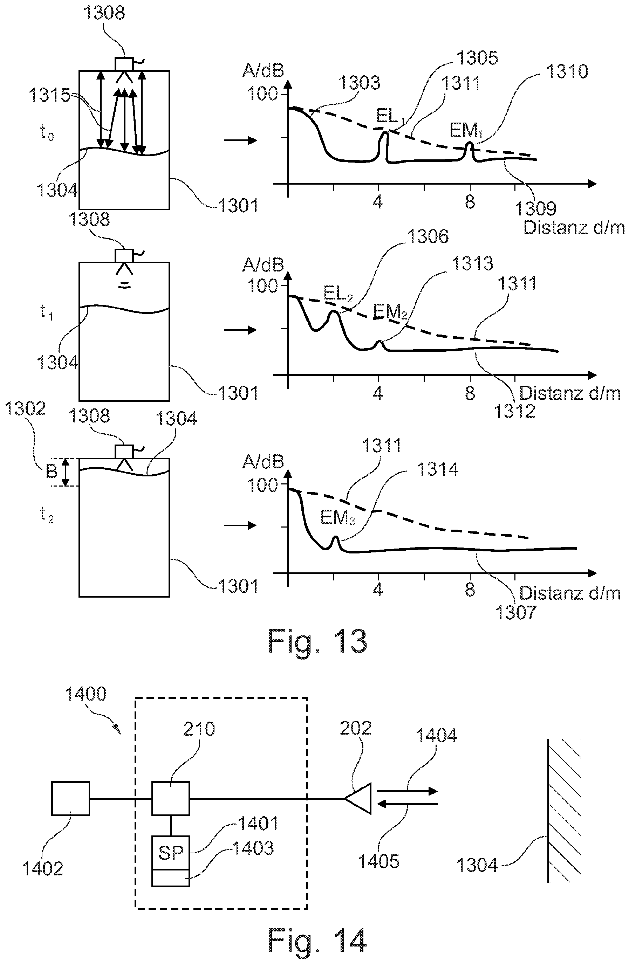

Fig. 13 zeigt eine besonders vorteilhafte Anwendung des erfindungsgemäßen Verfahrens anhand eines Behälters 1301, der beispielhaft komplett gefüllt werden soll. Wird in einer Anwendung die bei Füllstandmessgeräten übliche Blockdistanz B 1302 von typischerweise 50 cm zwischen dem Füllstandmessgerät und dem zu messenden Medium unterschritten, so spricht man allgemein von Überfüllung des Behälters. Diese Überfüllung stellt eine nicht spezifizierte Anwendung eines Füllstandmessgerätes dar, und muss vom Anwender in aller Regel verhindert werden. Hintergrund dieser Vorgabe ist, dass im Bereich bis beispielsweise 50 cm eine relativ starke Reflektion 1303 der Antenne des Füllstandmessgerätes empfangen wird. Befindet sich in diesem Bereich zusätzlich ein Echo 1305, 1306 der Füllgutoberfläche 1304, so interferieren das Echo der Antenne und das Echo des Füllgutes, was dazu führt, dass dieses anhand der Echokurve 1307 nicht mehr lokalisiert werden kann.
Unabhängig von diesen Randbedingungen ist es im Hinblick auf ASSET-Services ein erklärtes Ziel, eine Überfüllungssituation innerhalb eines Behälters sicher erfassen zu können. Detektiert ein Füllstandmessgerät eine unzulässige Überfüllung eines Behälters, so kann es gezielt darauf reagieren. Beispielsweise mag es möglich sein, einen Füllstand von 110% nach außen hin auszugeben, um dem Anwender mitzuteilen, dass der Behälter überfüllt ist. Weiterhin mag es auch möglich sein, über eine 4 bis 20 mA Schnittstelle einen Störstrom auszugeben, um dem Anwender mitzuteilen, dass die Anlage außerhalb der gültigen Spezifikation betrieben wird. Zudem kann das Eintreten einer Überfüllsituation vom Gerät in einem Ereignisspeicher persistent gespeichert werden, um bei einem eventuell notwendigen Serviceeinsatz eine gezielte Problemanalyse zu erleichtern.

Die Mechanismen, welche die Anwendung der vorliegenden Erfindung im Umfeld einer Überfüllungserkennung besonders vorteilhaft erscheinen lassen, werden mit Bezug auf Fig. 13 nachfolgend detailliert dargestellt.

Zum Zeitpunkt to emittiert das Füllstandmessgerät 1308 ein Signal in Richtung der zu vermessenden Füllgutoberfläche 1304. Das Füllgut befindet sich in einem nach oben hin geschlossenen Behälter 1301. Die anschließend vom Gerät empfangene Echokurve 1309 beinhaltet neben der vom Füllgut verursachten Reflektion EL1 1305 eine weitere Reflektion EM1 1310, welche durch eine Mehrfachreflexion Medium - Behälterdecke - Medium 1315 verursacht wird. Es sei weiterhin angenommen, dass im bisherigen Betrieb des Füllstandmessgerätes 1308 der darin enthaltene Amplitudenprofilierer 701 bereits ein Amplitudenprofil 1311 des Behälters erstellen konnte. Das Amplitudenprofil 1311 des Behälters wird ebenfalls im Koordinatensystem der Echokurvendarstellung gezeigt. Es ist deutlich zu sehen, dass das Füllstandecho EL1 1305 exakt zum Amplitudenprofil 1311 des Amplitudenprofilierers 701 am Ort des Füllstandes von d = 4m passt.
Zum Zeitpunkt t₁ wird ein weiterer Messzyklus des Füllstandmessgerätes initiiert. Die empfangene Echokurve 1312 beinhaltet wiederum ein Echo EL2 1306, welches von der Füllgutoberfläche 1304 verursacht wird, und ein Echo EM2 1313, welches durch eine Mehrfachreflektion verursacht wird. Es ist deutlich zu sehen, dass die Amplitude des Echos EL2 1306 exakt zum Amplitudenprofil 1311 des Amplitudenprofilierers 701 passt, wohingegen die Amplitude des Mehrfachechos EM2 1313 nicht zum Amplitudenprofil 1311 am Ort d = 4m passt.

Zum Zeitpunkt t₂ wird ein erneuter Messzyklus initiiert. Der Abstand zwischen dem Füllstandmessgerät 1308 und der Füllgutoberfläche 1304 zum Zeitpunkt t₂ unterschreitet nun deutlich die vom Werk definierte Blockdistanz B 1302. Es ist daher nun nicht mehr möglich, innerhalb der empfangenen Echokurve 1307 die von der Füllgutoberfläche stammende Reflektion zu lokalisieren. Würde ein Gerät nach bisherigem Stand der Technik verwendet, würde stattdessen die Distanz zum Mehrfachecho EM3 1314 als gültige Entfernung zum Füllstand ausgegeben. Das Gerät wäre nicht in der Lage, die Überfüllung des Behälters zu detektieren. Wird stattdessen ein Gerät gemäß der vorliegenden Erfindung verwendet, so wird innerhalb des Amplitudenbewerters 702 beim Vergleich der Amplitude des Echos EM3 1314 mit der erwarteten Amplitude des Amplitudenprofils 1311 am Ort des Echos EM3 festgestellt, dass diese sehr stark voneinander abweichen. Folglich kann das Echo EM3 nicht das von der Füllgutoberfläche 1304 verursachte Echo sein. Das Füllstandmessgerät kann daher automatisiert auf eine Überfüllung des Behälters schließen.

Weiterhin eröffnen sich durch das vom Gerät dynamisch erzeugte Amplitudenprofil neue Möglichkeiten der algorithmischen Auswertung.

Beispielsweise kommen bei einer sehr großen Abweichung der Amplitude eines sicher identifizierten Füllstandechos vom erwarteten Wert oder bei einer kontinuierlichen Veränderung bereits erlernter Amplitudenwerte verschiedene Ursachen in Betracht. Zum einen könnte auf eine verschmutzte Antenne geschlossen werden. Weiterhin mag es möglich sein, einen Elektronikdefekt auf diese Art und Weise zu detektieren. Zudem kann auf die Bildung von Schaum innerhalb des Behälters geschlossen werden. Außerdem mag es möglich sein, Abschätzungen bezüglich der Dielektrizitätskonstanten des Mediums oder der Änderung der Dielektrizitätskonstanten bei Medienwechsel zu berechnen, da sich diese unmittelbar auf das Reflexionsvermögen und damit auf die Amplitude des Füllstandechos auswirken.

Fig. 14 zeigt eine Elektronikeinheit 1400 gemäß einem Ausführungsbeispiel der Erfindung. Die Elektronikeinheit weist u. a. eine Recheneinheit 210 auf, welche zur Ermittlung des funktionalen Zusammenhangs vorgesehen ist. Die Recheneinheit 210 ist mit einem Speicher 1401 verbunden. Der Speicher 1401 weist einen nicht flüchtigen Speicherbereich 1403 auf, in welchem beispielsweise der funktionale Zusammenhang, statistische Kennwerte für die Füllstandamplitude und / oder weitere wichtige Informationen abgelegt werden können, die dann auch nach einem Neustart des Füllstandmessgerätes zur Verfügung stehen.

Weiterhin ist die Recheneinheit 210 mit der Sende-/Empfangsantennenanordnung 202 verbunden. Die Antennenanordnung 202 sendet ein Sendesignal zur Füllgutoberfläche 1304 aus, welches dort reflektiert wird und als Empfangssignal 1405 von der Antennenanordnung aufgenommen wird.

Weiterhin ist eine übergeordnete Steuerung 1402 vorgesehen, die Teil der Elektronikeinheit 1400 ist oder zumindest mit der Elektronikeinheit 1400 verbunden ist. Diese übergeordnete Steuerung kann die Recheneinheit 210 unterstützen oder steuern.

Ergänzend sei daraufhingewiesen, dass "umfassend" und "aufweisend" keine anderen Elemente oder Schritte ausschließt und "eine" oder "ein" keine Vielzahl ausschließt. Ferner sei daraufhingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

## Patentansprüche

1. Elektronikeinheit (1400) für ein Füllstandmessgerät (901) zur Bestimmung eines Füllstandes, die Elektronikeinheit aufweisend:
eine Recheneinheit (210) zur Ermittlung eines funktionalen Zusammenhangs (905) zwischen der Entfernung zwischen einer Füllgutoberfläche und dem Füllstandmessgerät (901) und einer Amplitude eines von der Füllgutoberfläche reflektierten und von dem Füllstandmessgerät (901) empfangenen Signalanteils des Empfangssignals;
einen Amplitudenprofilierer (701) zur Erstellung eines Profils der bislang beobachteten Amplitudenwerte des Füllstandechos bei verschiedenen Füllständen; und
einen Amplitudenbewerter (702) zum Ermitteln einer erwarteten Amplitude des Füllstandechos an einem bestimmten Ort des Echos anhand des Amplitudenprofils und zum Vergleich der Amplitude des Echos mit der erwarteten Amplitude.

2. Elektronikeinheit (1400) nach Anspruch 1, weiterhin aufweisend:
einen Speicher (1401);
wobei der funktionale Zusammenhang (905) in Form von Stützstellen (904, 908, 909, 910, 911) im Speicher abgelegt wird.

3. Elektronikeinheit (1400) nach Anspruch 2,
wobei der Speicher (1401) einen nichtflüchtigen Speicherbereich (1403) aufweist;
wobei das Eintreten einer Überfüllsituation, der funktionale Zusammenhang (905) und/oder der zumindest eine statistischer Kennwert (1201, 1202, 1203) für die Füllstandamplitude in dem nichtflüchtigen Speicherbereich abgelegt wird.

4. Füllstandmessgerät (901) mit einer Elektronikeinheit (1400) nach einem der Ansprüche 1 bis 3.

5. Verwendung eines Füllstandmessgerätes (901) nach Anspruch 4 in einer Anwendung, in welcher eine Überfüllung eintreten kann.

6. Verfahren zur Bestimmung eines Füllstandes mit einem Füllstandmessgerät (901), das Verfahren aufweisend die Schritte:
Aussenden eines Sendesignals (1404) zu einer Füllgutoberfläche;
Detektieren eines mit dem Sendesignal korrespondierenden Empfangssignals (1405);
Ermitteln eines funktionalen Zusammenhangs (905) zwischen der Entfernung zwischen der Füllgutoberfläche und dem Füllstandmessgerät (901) und einer Amplitude eines von der Füllgutoberfläche reflektierten und von dem Füllstandmessgerät (901) empfangenen Signalanteils des Empfangssignals;
Erstellen eines Profils der bislang beobachteten Amplitudenwerte des Füllstandechos bei verschiedenen Füllständen;
Ermitteln einer erwarteten Amplitude des Füllstandechos an einem bestimmten Ort des Echos anhand des Amplitudenprofils;
Vergleich der Amplitude des Echos mit der erwarteten Amplitude.

7. Verfahren nach Anspruch 6,
wobei der funktionale Zusammenhang (905) durch Anpassung der Koeffizienten einer mathematischen Gleichung (508, 603) hergestellt wird.

8. Verfahren nach einem der Ansprüche 6 oder 7,
wobei der funktionale Zusammenhang (905) zur Bewertung der Echos einer Echoliste (301) verwendet wird.

9. Verfahren nach einem der Ansprüche 6 bis 8,
wobei die Ermittlung des funktionalen Zusammenhangs (905) nur dann durchgeführt wird, wenn das Füllstandmessgerät den Füllstand mit hoher Zuverlässigkeit identifiziert.

10. Verfahren nach einem der Ansprüche 6 bis 9,
wobei die Ermittlung des funktionalen Zusammenhangs (905) nur dann durchgeführt wird, wenn sich das Echo (903, 907) der Füllgutoberfläche über mehrere Messzyklen hinweg in Bezug auf seine Position verändert.

11. Verfahren nach einem der Ansprüche 6 bis 10,
wobei bei der Ermittlung des funktionalen Zusammenhangs (905) zumindest ein statistischer Kennwert (1201, 1202, 1203) für die Füllstandamplitude ermittelt wird.

12. Verfahren nach Anspruch 11,
wobei der zumindest eine statistische Kennwert (1201, 1202, 1203) für die Füllstandamplitude zur Bewertung der Echos einer Echoliste (301) verwendet wird.

13. Verfahren nach einem der Ansprüche 6 bis 12,
wobei der funktionale Zusammenhang (905) dazu verwendet wird, das Eintreten einer Überfüllsituation zu detektieren.

14. Verfahren nach Anspruch 13,
wobei das Eintreten der Überfüllsituation dem Benutzer und / oder einer übergeordneten Steuerung (1402) signalisiert wird.

15. Verfahren nach Anspruch 14,
wobei die in einem nichtflüchtigen Speicherbereich (1403) abgelegten Informationen bei der Wiederinbetriebnahme des Messgerätes gelesen und zur Bewertung von Echos verwendet werden.

## Claims

1. An electronics unit (1400) for a filling-level measuring device (901) for determining a filling level, the electronics unit comprising:
an arithmetic unit (210) for determining a functional relationship (905) between the distance between a filling material surface and the filling-level measuring device (901) and an amplitude of a signal component reflected by the filling material surface and received by the filling-level measuring device (901);
an amplitude profiler (701) for creating a profile of amplitude values of filling level echoes observed so far at different filling levels; and
an amplitude evaluator (702) for determining an expected amplitude of the filling level echo at a particular location of the echo based on the profile of amplitude values and for comparing the amplitude of the echo with the expected amplitude.

2. The electronics unit (1400) according to claim 1, further comprising:
a storage device (1401);
wherein the functional relationship (905) is stored in the storage device in the form of grid points (904, 908, 909, 910, 911).

3. The electronics unit (1400) according to claim 2,
wherein the storage device (1401) comprises a non-volatile storage region (1403);
wherein an occurrence of an overfill situation, the functional relationship (905), and/or at least one statistical parameter (1201, 1202, 1203) relating to the filling level amplitude is stored in the non-volatile storage region.

4. A filling-level measuring device (901) with an electronics unit (1400) according to any one of claims 1 to 3.

5. Use of a filling-level measuring device (901) according to claim 4 in an application, in which overfilling can occur.

6. A method for determining a filling level with a filling-level measuring device (901), the method comprising the steps of:
emitting a transmission signal (1404) to a filling material surface;
detecting a receiving signal (1405) that corresponds with the transmission signal;
determining a functional relationship (905) between the distance between the filling material surface and the filling-level measuring device (901) and an amplitude of a signal component of the receiving signal, which signal component is reflected by the filling material surface and received by the filling-level measuring device (901);
generating a profile of amplitude values of a filling level echo, which have been observed so far;
determining an expected amplitude of the filling level echo at a particular location of the echo based on the profile of the amplitude values;
comparing the amplitude of the echo with the expected amplitude.

7. The method of claim 6,
wherein the functional relationship (905) is determined by adjusting the coefficients of a mathematical equation (508, 603).

8. The method according to any one of claims 6 or 7,
wherein the functional relationship (905) is used for evaluating the echoes of an echo list (301).

9. The method according to any one of claims 6 to 8,
wherein the functional relationship (905) is determined only when the filling-level measuring device has identified the filling level with high reliability.

10. The method according to any one of claims 6 to 9
wherein determining the functional relationship (905) is carried out only when the echo (903, 907) of the filling material surface changes its position over several measuring cycles.

11. The method according to any one of claims 6 to 10,
wherein for determining the functional relationship (905) at least one statistical parameter (1201, 1202, 1203) relating to the filling level amplitude is determined.

12. The method according claim 11,
wherein the at least one statistical parameter (1201, 1202, 1203) relating to the filling level amplitude is used for evaluating the echoes of an echo list (301).

13. The method according to any one of claims 6 to 12,
wherein the functional relationship (905) is used for detecting the occurrence of an overfill situation.

14. The method according to claim 13,
wherein the occurrence of an overfill situation is signaled to a user and/or to a higher-level control system (1402).

15. The method according to claim 14,
wherein the information stored in a non-volatile storage region (1403) is read when operation of the measuring device is resumed, and is used for evaluating echoes.

## Revendications

1. Unité électronique (1400) pour un appareil de mesure de niveau (901) destiné à la détermination d'un niveau, l'unité électronique comprenant :
une unité de calcul (210) pour la détermination d'une relation fonctionnelle (905) entre la distance entre une surface de la charge et l'appareil de mesure de niveau (901) et une amplitude d'une part du signal de réception, réfléchie par la surface de la charge et reçue par l'appareil de mesure de niveau (901) ;
un profileur d'amplitude (701) pour établir un profil des valeurs d'amplitude, observées jusqu'à présent, de l'écho de niveau pour différents niveaux ; et
un évaluateur d'amplitude (702) pour déterminer une amplitude escomptée de l'écho de niveau en une position définie de l'écho à l'aide du profil d'amplitude et pour comparer l'amplitude de l'écho à l'amplitude escomptée.

2. Unité électronique (1400) selon la revendication 1, comprenant en outre :
une mémoire (1401) ;
la relation fonctionnelle (905) étant mémorisée en forme de points d'appui (904, 908, 909, 910, 911) dans la mémoire.

3. Unité électronique (1400) selon la revendication 2,
la mémoire (1401) présentant une zone de mémoire non volatile (1403) ;
la survenance d'une situation de surcharge, la relation fonctionnelle (905) et/ou la au moins une valeur caractéristique statistique (1201, 1202, 1203) pour l'amplitude de niveau étant mémorisées dans la zone de mémoire non volatile.

4. Appareil de mesure de niveau (901) avec une unité électronique (1400) selon l'une des revendications 1 à 3.

5. Utilisation d'un appareil de mesure de niveau (901) selon la revendication 4 dans une application, dans laquelle peut survenir une surcharge.

6. Procédé de détermination d'un niveau par un appareil de mesure de niveau (901), le procédé comprenant les étapes :
émission d'un signal (1404) en direction d'une surface d'une charge :
détection d'un signal de réception (1405) correspondant au signal d'émission ;
détermination d'une relation fonctionnelle (905) entre la distance entre la surface de la charge et l'appareil de mesure de niveau (901) et une amplitude d'une part du signal de réception, réfléchie par la surface de la charge et reçue par l'appareil de mesure de niveau (901) ;
établissement d'un profil des valeurs d'amplitude, observées jusqu'à présent, de l'écho de niveau pour différents niveaux ;
détermination d'une amplitude escomptée de l'écho de niveau en une position définie de l'écho à l'aide du profil d'amplitude ;
comparaison de l'amplitude de l'écho et de l'amplitude escomptée.

7. Procédé selon la revendication 6,
la relation fonctionnelle (905) étant élaborée par adaptation des coefficients d'une équation mathématique (508, 603).

8. Procédé selon l'une des revendications 6 et 7,
la relation fonctionnelle (905) étant utilisée pour l'évaluation des échos d'une liste échos (301).

9. Procédé selon l'une des revendications 6 à 8,
la détermination de la relation fonctionnelle (905) n'étant réalisée que lorsque l'appareil de mesure de niveau identifie le niveau avec une fiabilité élevée.

10. Procédé selon l'une des revendications 6 à 9,
la détermination de la relation fonctionnelle (905) n'étant réalisée que lorsque l'écho (903, 907) de la surface de la charge se modifie quant à sa position pendant plusieurs cycles de mesure.

11. Procédé selon l'une des revendications 6 à 10,
au moins une valeur caractéristique statistique (1201, 1202, 1203) pour l'amplitude de niveau étant déterminée lors de la détermination de la relation fonctionnelle (905).

12. Procédé selon la revendication 11,
la au moins une valeur caractéristique statistique (1201, 1202, 1203) pour l'amplitude de niveau étant utilisée pour l'évaluation des échos d'une liste échos (301).

13. Procédé selon l'une des revendications 6 à 12,
la relation fonctionnelle (905) étant utilisée pour détecter la survenance d'une situation de surcharge.

14. Procédé selon la revendication 13,
la survenance de la situation de surcharge étant signalée à l'utilisateur et/ou à une commande de niveau supérieur (1402).

15. Procédé selon la revendication 14,
les informations mémorisées dans une zone de mémoire non volatile (1403) étant lues lors de la remise en service de l'appareil de mesure et utilisées pour l'évaluation d'échos.
